# EUROPEAN PATENT SPECIFICATION

(11) **EP 4 424 550 B1**
(45) Date of publication and mention of the grant of the patent: **29.10.2025**
(21) Application number: 22901601.9
(22) Date of filing: 08.11.2022
(51) Int. Cl.: B60L 53/80, B60L 53/53, B60L 53/66, B60L 53/51, B60L 53/52, B63H 21/17, H02J 7/14, H02J 7/00, B63J 3/04, B60L 8/00, B60L 53/14, B60L 53/63, B60L 53/67, B60L 53/68, B60S 5/06

(54) **EXCHANGEABLE MARINE ENERGY STORAGE SYSTEM AND CONTROL METHOD THEREOF**
AUSTAUSCHARTIGES OZEANENERGIESPEICHERSYSTEM UND STEUERUNGSVERFAHREN DAFÜR
SYSTÈME DE STOCKAGE D'ÉNERGIE OCÉANIQUE DE TYPE À ÉCHANGE ET SON PROCÉDÉ DE COMMANDE

(30) Priority: 02.12.2021 KR 20210171108
(43) Date of publication of application: 04.09.2024
(73) Proprietor: LG Energy Solution, Ltd., Seoul 07335 (KR)
(72) Inventor: LEE, Sunggun, Daejeon 34122 (KR)
(74) Representative: Plasseraud IP
(86) International application number: PCT/KR2022/017398
(87) International publication number: WO 2023/101242

(56) References cited:
- GB-A- 2 581 332
- JP-U- 3 226 252
- KR-A- 20190 140 316
- KR-B1- 101 918 920
- KR-B1- 101 918 920
- KR-B1- 102 308 659
- SG-A- 112021 015 57R
- US-A1- 2012 158 229
- US-A1- 2018 159 347
- US-A1- 2020 406 765

## Description

### [Technical Field]

This application is claims priority to Patent Application No. 10-2021-0171108 filed in the Republic of Korea on December 2, 2021.

The present disclosure relates to an exchangeable marine energy storage system and a control method thereof, more particularly, an exchangeable marine energy storage system that may increase the operation distances of a ship using an electric battery.

### [Background Art]

A conventional ship is provided with a power propulsion device configured to drive a propeller mounted to the rear. A steam turbine system and an electric propulsion system are typically used as the power propulsion device.

The steam turbine system is a rotary steam power motor. The steam turbine system is a type of external combustion engine configured to generate power by ejecting the high-pressure steam from a boiler through a nozzle to a rotating impeller, after making high-speed steam jets.

Since it has low vibration and high performance as well as high-speed and large-capacity propulsion, such the steam turbine system is widely applied to thermal power generation and a ship propulsion engine. However, the steam turbine system has a disadvantage of unnecessarily increasing the weight of the ship due to its noise and excessively large scale.

To improve such a disadvantage, the electric propulsion system using an electric motor with less noise, less pollution, and strong propulsion, compared to the steam turbine system, is applied.

The electric propulsion system of the ship propels a ship by driving a propulsion shaft connected to a propeller at an end by using an electric motor for propulsion. The electric propulsion system has been applied to various types of ships such as LNG carriers, cruise ships and drilling ships.

When a battery is used as the driving power of a large ship, the capacity of the battery should be increased in consideration of the load of the large ship and long-distance operation. However, the increase in the battery capacity results in the increase in the weight of the battery itself so that there may be disadvantages in that the operating distance of the ship is shortened and the operating efficiency of the electric motor is deteriorated.

Moreover, when the battery capacity increases, the time for charging the battery also increases so that there is a problem of increasing the overall operating time of the ship.

The background art of the present disclosure is disclosed in KP 2021-009020 (published on July 23, 2021, Title of Invention: POWER CONTROL DEVICE FOR ELECTRIC PROPULSION SHIP). Another background art can be found in KR 101918920 B1, describing an energy supply ship. Another background art can be found in SG 11202101557 A, describing a battery-electricity propulsion ship electric power feed system.

### [Description of Disclosure]

### [Technical Problems]

Accordingly, one objective of the present disclosure is invented to solve the above-noted disadvantages of the prior art, and to provide an exchangeable marine energy storage system that may facilitate long-distance navigation even with a battery having a smaller charging capacity than the conventional one, and a control method thereof.

Another objective of the present disclosure is to provide an exchangeable marine energy storage system to solve the disadvantage of increasing the overall operating time of a ship due to the long-charging time of a battery mounted in a ship in the prior art.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

An exchangeable marine energy storage system and a control method thereof according to the present disclosure may be characterized in that a mobile battery of a mobile charging ship is replaced with a mounted battery mounted in the operating ship.

Specifically, since the mobile charging ship equipped with the mobile battery is located on a movement path of the operating ship, the battery loaded on the mobile charging ship is exchanged with the mounted battery loaded on the operating ship in order to increase the movable distance of the operating ship. In addition, since the mounted battery loaded on the operating ship may be replaced with a mobile battery, a smaller capacity mounted battery may be used compared to the conventional one, thereby reducing the total weight of the operating ship.

Further, the exchangeable marine energy storage system and the control method thereof may be characterized in that electricity for power generation that is stored in the charging station is transferred to the mobile charging ship to charge the mobile battery.

Still further, the exchangeable marine energy storage system and the control method thereof may be characterized in that energy supply of the operating ship is continuously performed by dividing the movement route of the operating ship into a plurality of zones and distributing the mobile charging ship and the charging station in the zones.

An exchangeable marine energy storage system according to an embodiment is defined according to claim 1.

The exchangeable marine energy storage system may further include an operation controller wirelessly configured to be connected with the operating ship, the at least one mobile charging ship and the charging station, and configured to control operations of the at least one mobile charging ship and the charging station based on a location and a navigation route of the operating ship transmitted to the operation controller.

The operating ship may be supplied electricity through the mounted battery or the mobile battery which may generate a propulsion power of the operating ship by operating an electric motor provided in the operating ship.

The at least one mobile charging ship may be a plurality of mobile charging ships , and configured to dock with the charging station and charge the mobile battery of each of the plurality of mobile charging ships by using electricity transmitted to the plurality of mobile charging ships through the charging station.

The at least one mobile charging ship may be operated by an unmanned system configured to automatically operate based on a control signal of the operation controller.

An exchangeable marine energy storage system according to an embodiment may include a mounted battery mounted inside an operating ship and configured to be used as a power source of the operating ship; a charging station installed at a location distant from the operating ship, and configured to generate power by using at least one of solar light, tidal power and wind power and float on the sea; and a mobile charging ship configured to perform charging by docking with the charging station, and configured to move to a movement route of the operating ship.

A mobile battery may be installed inside the mobile charging ship and configured to be replaced with the mounted battery. The mobile battery may be charged while the mobile charging ship docks with the charging station or by using solar light power generation inside the mobile charging ship.

The mobile charging ship may be provided in plural and dock with the charging station in plural, and configured to move to a preset location along a movement route of the operating ship.

Communication may be possible between the operating ship and the charging station to exchange information. Communication may be possible between the charging station and the mobile charging ship to exchange information or communication may be possible between the operating ship and the mobile charging ship to exchange information.

Navigation information of the operating ship including a location and a destination arrival time of the operating ship and a capacity of a mounted battery may be transmitted through communication between the operating ship and the charging station.

The mobile charging ship may be provided in plural and a navigation route of the operating ship may be divided into a plurality of zones. The mobile charging ship may be moved in each of the zones to anchor.

The charging station may include a station body configured to float on the sea; and a power generator disposed in the station body and configured to generate electricity by using at least one of solar light, wind power and tidal power.

The charging station may include a first docking connection part protruding from a lateral surface of the station body. In addition, the at least one mobile charging ship may include a second docking connection part connected with the first docking connection part.

In a state in which the first docking connection part and the second docking connection part are connected with each other, electricity stored in the charging station may be transmitted to the at least one mobile charging ship to charge the mobile battery.

A control method of an exchangeable marine energy storage system according to an embodiment is defined according to claim 9..

The control method of an exchangeable marine energy storage system may further include dividing a navigation route of the operating ship into a plurality of zones.

The control method of an exchangeable marine energy storage system may further include determining a total retained energy capacity of each zone based on a number of the mobile charging ship and the charging station measured in each of the divided zones; and moving at least one of the mobile charging ship and the charging station to an zone having an insufficient total retained energy capacity after determining the total retained energy capacity.

### [Advantageous Effects]

The exchangeable marine energy storage system and a control method thereof according to the present disclosure may allow the operating ship to travel long distances even when the battery with the smaller charging capacity than the conventional one, thereby reducing transportation costs.

In addition, according to the exchangeable marine energy storage system and a control method thereof, the supply of electricity energy may be continuously performed by exchanging the mounted battery mounted in the operating ship without charging it, thereby reducing the overall operating time of the ship.

According to the exchangeable marine energy storage system and a control method thereof, the mobile charging ship may charge the mobile battery and also the electricity for power generation stored in the charging station may be transferred to the mobile charging ship to charge the mobile battery, thereby reducing the time and cost required for charging the mobile battery.

In addition, according to the exchangeable marine energy storage system and a control method thereof, the mobile charging ship may exchange the battery after approaching the operating route of the operating ship, thereby minimizing a degree of the operating ship's changing of the operation route to charge the mounted battery and reducing the time of the operation of the operating ship.

In addition, according to the exchangeable marine energy storage system and a control method thereof, energy supply of the operating ship may be continuously performed by dividing the movement route of the operating ship into a plurality of zones and distributing the mobile charging ship and the charging station in the zones, thereby increasing the movable distance of the operating ship.

In addition to the above-described effects, specific effects of the present invention will be described together with the following detailed description for implementing the present invention.

### [Brief Description of Drawings]

FIG. 1 is a view showing an exchangeable marine energy storage system according to an embodiment of the present disclosure;
FIG. 2 is a view showing a charging station and a mobile charging ship according to an embodiment of the present disclosure;
FIG. 3 is a view showing a state a route of an operating ship is divided into a plurality of zones;
FIG. 4 is a plane view showing a charging station and a mobile charging ship according to an embodiment of the present disclosure;
FIG. 5 is a block view showing an exchangeable marine energy storage system according to an embodiment of the present disclosure; and
FIG. 6 is a flow chart showing a control method of an exchangeable marine energy storage system according to an embodiment of the present disclosure.

### [Description of Reference Numerals]

1: Exchangeable marine energy storage system 10: Operating ship 20: Mounted battery 30: Mobile battery 40: Mobile charging ship 41: Ship body 42: Mobile power generation unit 43: Second docking connection part 50: Charging station 51: Station body 52: Power generation unit 53: Electricity storage unit 54: First docking connection part 60: Operation controller A1: First zone A2; Second zone A3: Third zone S10: Calculating step S20: Dividing step S30: Measuring step S40: Adjusting step S50: Exchange-position setting step S60: Exchanging step

### [DESCRIPTION OF SPECIFIC EMBODIMENTS]

The above objects, features and advantages will be described later in detail with reference to the accompanying drawings, and accordingly, those skilled in the art to which the present invention belongs will be able to easily implement the technical idea of the present invention. In describing the present invention, if it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component. ", or each component may be "linked", "coupled" or "connected" through other components.

Throughout the specification, unless otherwise stated, each component may be singular or plural.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. Or may further include additional components or steps.

Throughout the specification, when it says "A and/or B", it means A, B or A and B, unless otherwise specified, and when it says "C to D", it means C or more and D or less, unless otherwise specified.

Hereinafter, an exchangeable marine energy storage system 1 according to an embodiment of the present disclosure and a control method thereof will be described.

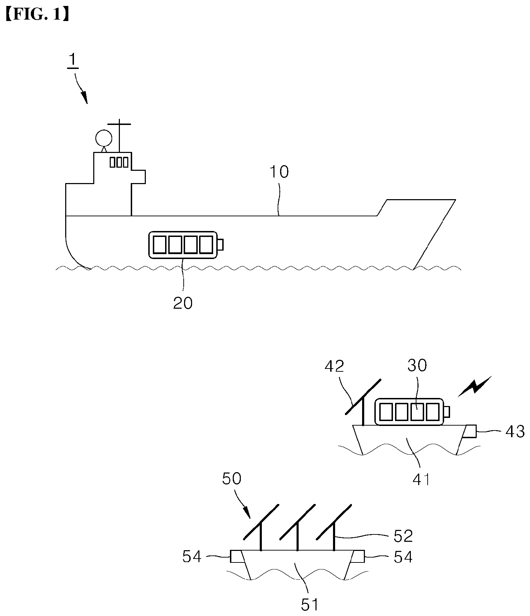

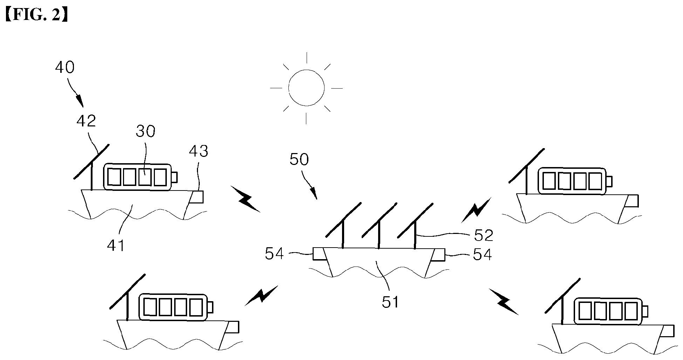

FIG. 1 is a view showing an exchangeable marine energy storage system 1 according to an embodiment of the present disclosure. FIG. 2 is a view showing a charging station 50 and a mobile charging ship 40 according to an embodiment of the present disclosure.

As shown in FIGS. 1 and 2, the exchangeable marine energy storage system 1 according to an embodiment may provide a mobile charging ship 40 and a charging station 50 that store electrical energy along a navigation route of an operating ship 10, and may be configured to supply electrical energy to the operating ship 10.

That is, the mobile charging ship 40 mounting a mobile battery 30 therein may be located on the navigation route. Accordingly, the battery loaded on the mobile charging ship 40 may be exchanged with the mounted battery 20 loaded on the operating ship 10, so that the movable distance of the operating ship 10 can be increased.

Since the mounted battery 20 loaded on the operating ship 10 is exchangeable with the mobile battery 30 mounted in the mobile charging ship 40, a smaller capacity mounted battery 20 compared to the conventional battery may be used and then the total weight of the operating ship 10 may be reduced so that the electrical energy consumed may be saved.

A plurality of mobile charging ships 40 may be provided per one charging station 50, and each mobile charging ship 40 may be supplied electrical energy through the charging station 50 or supplied with electrical energy by self-generation using sunlight or wind power.

The charging station 50 may be modified in various ways such as remaining anchored at sea or moving to preset coordinates based on a control signal.

The operating ship 10 may be supplied electricity through the mounted battery 20 or the mobile battery 30, and generate propulsion by operating an electric motor provided therein. The operating ship 10 may be used for various purposes such as a cargo ship or a passenger ship, and the mounted battery 20 may be installed in the operating ship 10.

The route of a cargo ship or a passenger ship, which is operating, may be determined as the most efficient route. The charging station and the mobile charging ship may be disposed near the navigation route. The charging station and the mobile charging ship may be disposed near the route, but they may be preferably disposed in an area where the weather is uniformly clear enough to favor solar power generation, an area where the wind speed and direction are constant to favor wind power generation, and an area with strong waves to favor wave power generation.

The electrical energy of the mounted battery 20 may generate rotational power by driving an electric motor provided in the operating ship 10, and the rotational power may rotate a screw to move the operating ship 10.

The operating ship 10 may be provided with a separate power generation facility for charging the mounted battery 20. The power generation facility may generate electrical energy, using at least one of solar light, wind power and tidal power. The power generation facility may be modified in various ways such as generating electrical energy by using petroleum as a raw material.

The mounted battery 20 may be a battery mounted inside the operating ship 10 and configured to store electrical energy. The mounted battery 20 may be used as a power source of the operating ship 10.

The mobile battery 30 may be exchanged with the mounted battery 20 mounted in the operating ship 10 to be used as a power source of the operating ship 10.

The mounted battery 20 and the mobile battery 30 are batteries having the same size and the same electrical energy storage capacity. However, for convenience of description, the battery mounted in the operating ship 10 is referred to as the mounted battery 20 and the battery mounted in a mobile charging ship 40 is referred to as the mobile battery 30.

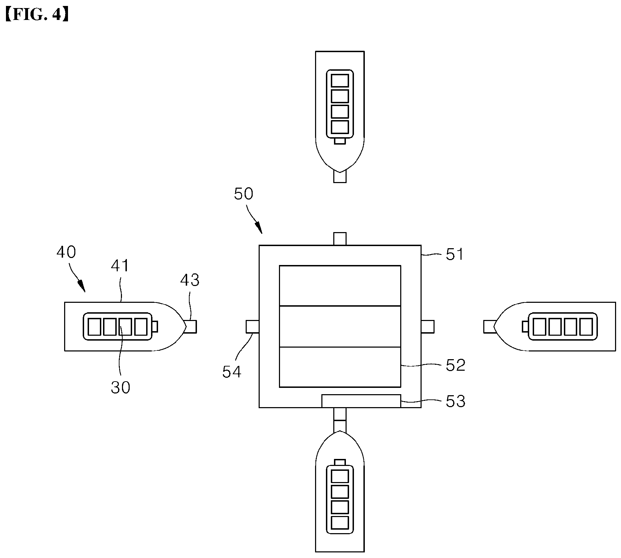

FIG. 4 is a plane view showing a charging station 40 and a mobile charging ship 50 according to an embodiment of the present disclosure.

As shown in FIGS. 2 and 4, the mobile charging ship 40 may be a ship capable of performing maritime movement by itself, and the mobile battery 30 to be exchanged with the mounted battery 20 may be installed inside the mobile charging ship 40.

The mobile charging ship 40 may move with the mobile battery 30 loaded therein. In addition, the charging of the mobile battery 30 may be performed once the mobile charging ship 40 is docked to the charging station 50. The mobile charging ship 40 may include an energy harvesting device (e.g., a solar panel) to charge the mobile battery 30 by itself. In addition, the mobile charging ship 40 may be moved along the navigation route of the operating ship 10, and may dock with the operating ship 10 or maintain a preset distance with the operating ship 10. While keeping this state, the exchange of the mounted battery 20 with the mobile battery 30 may be performed.

The mobile charging ship 40 according to an embodiment of the present disclosure may be provided in plural. The plurality of mobile charging ships 40 may dock with the charging station 50 and may charge the mobile battery 30 with electricity supplied by the charging station 50.

The mobile charging ship 40 may include a power generation unit 52 configured to generate power by using at least one of wind power, solar light and tidal power. A mobile power generation unit 52 according to an embodiment may be configured to generate electricity through solar power generation.

The power source of the mobile charging ship 40 may use the electricity generated in the power generation unit 52. Since it generates the electricity by using at least one of the wind power, solar light and tidal power, the power generation unit 52 may move the mobile charging ship 40 by operating a motor provided in the mobile charging ship 40. The mobile charging ship 40 may further include a separate battery for driving the motor. In addition, a separate emergency diesel fuel may be charged in the mobile charging ship 40 and an engine operated using such diesel fuel may be additionally provided in the mobile charging ship 40.

The mobile battery 30 may be charged as the mobile charging ship 40 docks with the charging station 50 or by the solar light generation of the mobile charging ship 40.

The mobile charging ship 40 may be operated by an unmanned system configured to be automatically operated based on a control signal of the operation controller 60. If necessary, a person may directly board the mobile charging ship 40.

The mobile charging ship 40 according to an embodiment may include a ship body 41, a mobile power generation unit 42 and a second docking connection part 43.

The mobile power generation unit 42 may have a ship shape, and may be modified in various ways such as being operated by electrical energy or a separate internal combustion engine provided therein.

The mobile power generation unit 42 may be disposed inside the ship body 41. The mobile power generation unit 42 may be configured to generate electricity by using at least one of wind power, solar light and tidal power. The mobile power generation unit 42 according to an embodiment may include a solar panel configured to generate electricity by using solar light.

The second docking connection part 43 may protrude outward from the ship body 41, and may be coupled to a first docking connection part 54 provided in the charging station 50 to secure the ship body 41 to the outside of the charging station 50.

The mobile ship 40 may be provided in plural to dock with the charging station 50. The plurality of mobile ships 40 may move to preset positions along the navigation route of the operating ship 10, respectively. The mobile charging ship 40 may be provided with communication equipment so that communication may be made between the mobile charging ship 40 and the operating ship 10 to exchange diverse information including location information with each other.

The electricity for power generation, which is stored in the charging station 50, may be transmitted to the mobile charging ship 40 to charge the mobile battery 30. The charging station 50 may be floating on the sea together with the mobile charging ship 40 and charge the mobile battery 30 loaded on the mobile charging ship by using the electricity generated in the charging station 50.

The charging station 50 floating on the sea may be modified in various ways within a technical feature of storing electrical energy by generating power and charging the mobile batter 30 loaded on the mobile charging ship 40. The charging station 50 may be installed at a position spaced apart from the operating ship 10, and configured to generate power by using at least one of solar light, tidal power and wind power.

The charging station 50 according to an embodiment may include a station body 51, a power generation unit 52, an electricity storage unit 53 and a first docking connection part 54.

The station body 51 may have a shape floating on water like the body of a ship. The station body 51 may have the same shape as a conventional ship, and may include a rectangular upper plate so that the plurality of mobile charging ships 40 can dock at the same time. The station body 51 may be modified in various ways within the technical feature of having the shape floating on the sea.

The power generation unit 52 may be disposed inside the station body 51 and configured to generate electricity by using at least one of the solar light, wind power and tidal power. The power generation unit 52 according to an embodiment may be configured to generate electricity by using solar light.

The electricity storage unit 53 may be a device configured to store the electricity generated by the power generation unit 52. Various devices including a battery may be used as the electricity storage unit 53.

The first docking connection part 54 may protrude to a lateral surface of the station body 51 and may be connected with the second docking connection part 43 provided in the mobile charging ship 40. In a state where the first docking connection part 54 and the second docking connection part 43 are connected with each other, the electricity stored in the charging station 50 may be transmitted to the mobile charging ship 40 to charge the mobile battery 30.

The electrical energy stored in the charging station 50 may be transmitted to the mobile charging ship 40 wirelessly or through wire. Since the electricity for power generation stored in the charging station 50 charges the mobile battery 30 by being transmitted to the mobile charging ship 40, the time and cost required for charging the mobile battery 30 may be reduced.

Each of the operating ship 10, the mobile charging ship 40 and the charging station 50 may include a communication device. Communication between the operating ship 10 and the charging station 50 may be performed to exchange information, and communication between the charging station 50 and the mobile charging ship 40 may be performed to exchange information. Through communication between the operating ship 10 and the charging station 50, navigation information of the operating ship 10 including the location of the operating ship 10, the arrival time to the destination and the capacity of the mounted battery 20 may be transmitted.

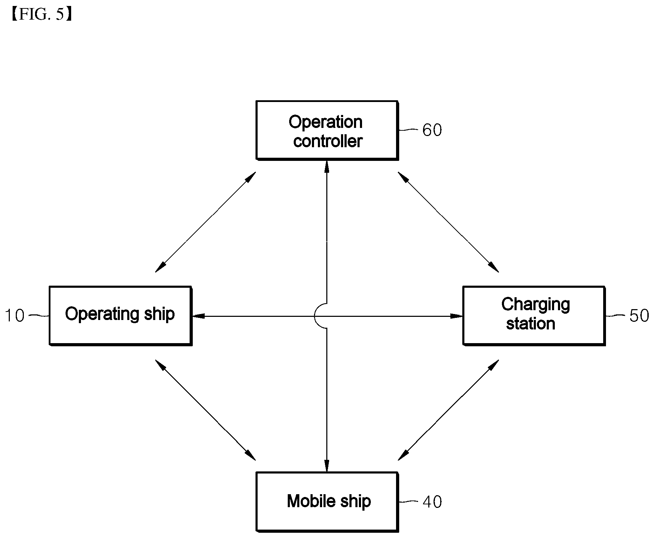

FIG. 5 is a block view showing an exchangeable marine energy storage system 1 according to an embodiment of the present disclosure.

As shown in FIG. 5, the operation controller 60 may be wirelessly connected with the mobile charging ship 40 and the charging station 50. The operation controller 60 may function as a server and control each component provided in the exchangeable marine energy storage system 1.

The operation controller 60 may be provided inside the charging station 50. In another embodiment, the operation controller 60 may be modified in various ways such as being provided inside the operating ship 10 or in a separate controller installed on land.

The operation controller 60 according to an embodiment may control the operations of the mobile charging ship 40 and the charging station 50 based on the location and navigation route of the operating ship 10.

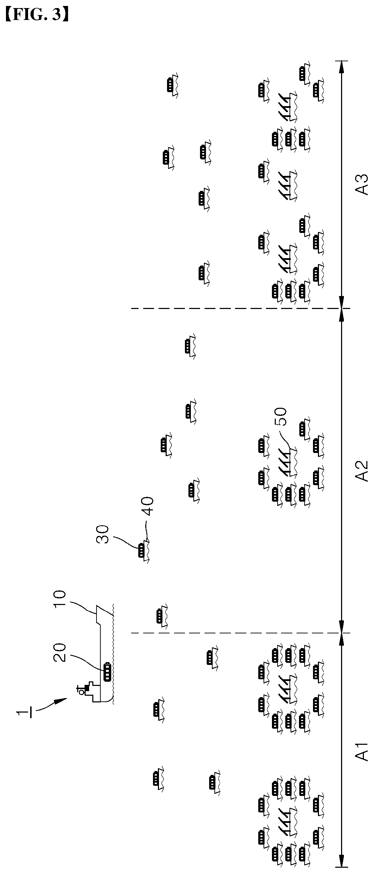

FIG. 3 is a view showing a state a route of an operating ship 10 is divided into a plurality of zones.

As shown in FIG. 3, the operation controller 60 according to an embodiment may divide the navigation route of the operating ship 10 into a plurality of zones. The energy supply of the operating ship 10 may be continuously controlled by distributing the mobile charging ship 40 and the charging station 50 for each zone. Accordingly, the movable distance of the operating ship 10 that can continuously operate without anchoring may be increased.

A plurality of mobile charging ships 40 may be provided and the navigation route of the operating ship 10 is divided into a plurality of zones. The mobile charging ships 40 may be moved to and anchored in each of the zones.

In an embodiment of the present disclosure, the operation controller 60 may divide the route of the operating ship 10 into three zones. The area where the operating ship 10 departs may be set as a first area A1, and the area where the operating ship 10 arrives may be set as a third zone A3. The area between the first zone A1 and the third zone A3 may be set as a second zone A2.

The operation controller 60 may assign the charging station 50 and the mobile charging ship 40 to the first zone A1, the second zone A2, and the third zone A3, respectively. If necessary, the operation controller 60 may move the charging station 50 and the mobile charging ship 40 may move to another zone.

The size of the zone may be determined in consideration of natural factors that generate electrical energy such as solar radiation and wind power. The operation controller 60 may count the number of the charging stations 50 and the number of the mobile charging ships 40 in each zone, and calculate the energy capacity that can be generated in each zone.

If the energy capacity of a specific zone is small, the energy capacity of the corresponding zone may be increased by increasing the number of the charging stations or the mobile charging ships 40.

If the energy capacity of one of the divided zones is small and that of another one is large, the operation controller 60 may move the mobile charging ship 40 or the charging station 50 in the zone having the large energy capacity to the zone having the small energy capacity.

Hereinafter, referring to the accompanying drawings, a control method of the exchangeable marine energy storage system 1 according to an embodiment will be described in detail.

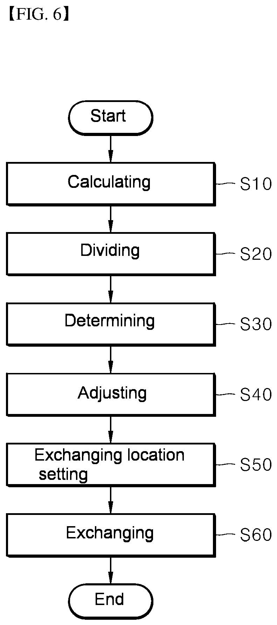

FIG. 6 is a flow chart showing a control method of an exchangeable marine energy storage system 1 according to an embodiment of the present disclosure.

As shown in FIG. 6, the control method of the exchangeable marine energy storage system 1 may include a moveable distance calculating step S10 of calculating the distance that the operating ship 10 can be operated by using the mounted battery 20 mounted therein.

Before the operation of the operating ship starts, information on the operation ship 10, the navigation route and information such as the capacity of the mounted battery 20 may be transmitted to the operation controller 60. The operation controller 60 may calculate the moveable distance of the operating ship 10 in consideration of weather information, a state of the operating ship 10 and the mounted battery 20, and the like.

The calculation of the moveable distance may include factors such as the navigation speed of the operating ship 10, current, wind speed and temperature.

The moveable distance calculation may be performed by the operating ship 10 or the operation controller 60. After the calculation is performed by the operating ship 10, coordinates requiring replacement of the mounted battery 20 may be transmitted to the operation controller 60. Alternatively, the operation controller 60 receives data from the operating ship 10 and calculates the coordinates requiring the replacement of the mounted battery 20 to transmit to the operating ship 10.

After the calculation step, the control method may include a dividing step S20 of dividing a navigation route of the operating ship 10 into a plurality of zones. In an embodiment of the present disclosure, the plurality of zones may include a first zone A1, a second zone A2 and a third zone A3, but the present disclosure is not limited thereto. Various modifications are possible such as the number of the zones may be three or more or less.

After the dividing step S20, the operation controller 60 may perform a measuring step S30 of determining the total energy capacity of each zone based on the number of the mobile charging ships 40 and the charging stations 50 disposed in each of the divided zones.

For example, when the first zone A1 has more mobile charging ships 50 and charging stations 50 than the second zone A2, the operation controller 60 determines that the first zone A1 has more total energy capacity than the second zone A2.

After the measuring step S30, the operation controller 60 may perform an adjusting step S40 of moving at least one of the mobile charging ships 40 and the charging stations 50 to the zone having insufficient total energy capacity.

The operation controller 60 may re-adjust the arrangement of each zone and the number of the mobile charging ships and the charging stations 50 disposed in each zone, based on the movement route and movement distance of the operating ship 10 and the number of the mobile charging ships 40 and charging stations 50.

After receiving the moveable distance calculated by the operating ship 10 and the movement route of the operating ship 10, the operation controller 60 may perform an exchange location setting step S50 of setting an exchange location and time of the mounted battery 20 mounted in the operating ship 10.

The operation controller 60 may set points for exchanging the mounted battery 20 loaded on the operating ship 10 and select one of the mobile charging ships 40 that is located close to the movement route of the operating ship 10 and has completed the charging of the mobile battery 30.

Hence, the operation controller 60 may perform an exchanging step S60 of exchanging the mounted battery 20 with the mobile battery 30 mounted in the mobile charging ship 40 by moving the operating ship 10 to an exchange location.

The mobile charging ship 40 may move to the battery exchange location and exchange the batteries with the operating ship 10. The operating ship 10 may move to the destination, while repeating the battery exchange described above.

After the battery exchange, the mobile battery 30 loaded on the mobile charging ship 40 may be charged with electrical energy generated by the mobile power generation unit 42 of the mobile charging ship 40. The mobile charging ship 40 may move to the charging station 50 and dock with the charging station 50 so that the mobile battery 30 loaded on the mobile charging ship 40 may be charged through the charging station 50.

The mobile charging ship 40 in which the mobile battery 30 has been charged completely may be moved to a position adjacent to the charging station 50 or a preset position to standby.

The operation controller 60 may frequently check the total amount of energy in each zone. When the total amount of energy in one of the zones is a preset amount of less, the operation controller 60 may move at least one of the mobile charging ship 40 and the charging station 50 to the zone having the insufficient total energy amount.

When using the exchangeable marine energy storage system 1 according to the embodiment, the long-distance operation of the operating ship 10 having the mounted battery 20 with a smaller charging capacity than the conventional one of the prior art may be possible, thereby reducing transportation costs.

In addition, the supply of electrical energy may be continuously performed by exchanging the mounted battery 20 mounted on the operating ship 10 without charging it, thereby shortening the overall operating time of the ship and reducing the transportation costs.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An exchangeable marine energy storage system (1) comprising:
a mobile battery (30) configured to be used as a power source of an operating ship (10) after replacing a mounted battery (20) mounted on the operating ship (10);
**characterized in that** at least one mobile charging ship (40) configured to move the mobile battery (30) between the operating ship (10) and a charging station (50); and
the charging station (50) configured to float on the sea with the at least one mobile charging ship (40) and charge the mobile battery (30) loaded on the at least one mobile charging ship (40) by using electricity generated by the charging station (50).

2. The exchangeable marine energy storage system (1) of claim 1, further comprising:
an operation controller (60) wirelessly configured to be connected with the operating ship (10), the at least one mobile charging ship (40) and the charging station (50), and configured to control operations of the at least one mobile charging ship (40) and the charging station (50) based on a location and a navigation route of the operating ship (10) transmitted to the operation controller (60).

3. The exchangeable marine energy storage system (1) of claim 2, wherein the operating ship (10) is supplied electricity through the mounted battery (20) or the mobile battery (30) which generate a propulsion power of the operating ship (10) by operating an electric motor provided in the operating ship (10).

4. The exchangeable marine energy storage system (1) of claim 2, wherein the at least one mobile charging ship (40) is a plurality of mobile charging ships (40) configured to dock with the charging station (50) and charge the mobile battery (30) of each of the plurality of mobile charging ships (40) by using electricity transmitted to the plurality of mobile charging ships (40) through the charging station (50).

5. The exchangeable marine energy storage system (1) of claim 2, wherein the at least one mobile charging ship (40) is operated by an unmanned system configured to automatically operate based on a control signal of the operation controller (60).

6. The exchangeable marine energy storage system (1) of claim 2, wherein the charging station (50) comprises,
a station body (51) configured to float on the sea; and
a power generator (52) disposed in the station body (51) and configured to generate electricity by using at least one of solar light, wind power and tidal power.

7. The exchangeable marine energy storage system (1) of claim 6, wherein the charging station (50) comprises a first docking connection part (54) protruding from a lateral surface of the station body (51), and
wherein the at least one mobile charging ship (40) comprises a second docking connection part (43) connected with the first docking connection part (54).

8. The exchangeable marine energy storage system (1) of claim 7, wherein, in a state in which the first docking connection part (54) and the second docking connection part (43) are connected with each other, electricity stored in the charging station (50) is transmitted to the at least one mobile charging ship (40) to charge the mobile battery (30).

9. A control method of the exchangeable marine energy storage system (1) of claim 1, the method comprising:
transmitting, from the operating ship (10) to an operation controller (60), a movement route of the operating ship (10);
calculating, by the operation controller (60), a moveable distance of the operating ship (10) through the mounted battery (20) mounted in the operating ship (10);
setting, by the operation controller (60) based on the movable distance and the movement route of the operating ship (10), an exchanging position and time of the mounted battery (20) mounted in the operating ship (10); and
replacing the mounted battery (20) with the mobile battery (30) mounted on the mobile charging ship (40) after moving the operating ship (10) to the exchanging position.

10. The control method of the exchangeable marine energy storage system (1) of claim 9, further comprising:
dividing, by the operation controller (60), the moving route of the operating ship (10) into a plurality of zones;
determining, by the operation controller (60), a total retained energy capacity of each zone based on a number of the mobile charging ship (40) and the charging station (50) measured in each of the divided zones; and
moving at least one of the mobile charging ship (40) and the charging station (50) to a zone having an insufficient total retained energy capacity after determining the total retained energy capacity, wherein the insufficient total retained energy capacity is defined by the total amount of energy of the mobile charging ship (40) and the charging station (50) for the respective zone being lower than a preset amount of energy.

## Patentansprüche

1. Austauschbares Marine-Energiespeichersystem (1), umfassend:
eine mobile Batterie (30), welche dazu eingerichtet ist, als eine Leistungsquelle eines in Betrieb befindlichen Schiffs (10) verwendet zu werden, nachdem eine angebrachte Batterie (20), welche an dem in Betrieb befindlichen Schiff (10) angebracht ist, ersetzt wird;
**dadurch gekennzeichnet, dass** wenigstens ein mobiles Ladeschiff (40) dazu eingerichtet ist, die mobile Batterie (30) zwischen dem in Betrieb befindlichen Schiff (10) und einer Ladestation (50) zu bewegen; und
wobei die Ladestation (50) dazu eingerichtet ist, auf dem Meer mit dem wenigstens einen mobilen Ladeschiff (40) zu schwimmen und die mobile Batterie (30), welche auf dem wenigstens einen mobilen Ladeschiff (40) geladen ist, unter Verwendung von Elektrizität zu laden, welche durch die Ladestation (50) generiert wird.

2. Austauschbares Marine-Energiespeichersystem (1) nach Anspruch 1, ferner umfassend:
eine Betriebssteuereinheit (60), welche drahtlos dazu eingerichtet ist, mit dem in Betrieb befindlichen Schiff (10), dem wenigstens einen mobilen Ladeschiff (40) und der Ladestation (50) verbunden zu sein, und dazu eingerichtet ist, Betriebe des wenigstens einen mobilen Ladeschiffs (40) und der Ladestation (50) auf Grundlage eines Standorts und einer Navigationsroute des in Betrieb befindlichen Schiffs (10) zu steuern, welche an die Betriebssteuereinheit (60) übertragen werden.

3. Austauschbares Marine-Energiespeichersystem (1) nach Anspruch 2, wobei das in Betrieb befindliche Schiff (10) mit Elektrizität über die angebrachte Batterie (20) oder die mobile Batterie (30) versorgt wird, welche eine Vortriebsleistung des in Betrieb befindlichen Schiffs (10) durch ein Betreiben eines elektrischen Motors generieren, welcher in dem in Betrieb befindlichen Schiff (10) bereitgestellt ist.

4. Austauschbares Marine-Energiespeichersystem (1) nach Anspruch 2, wobei das wenigstens eine mobile Ladeschiff (40) eine Mehrzahl von mobilen Ladeschiffen (40) ist, welche dazu eingerichtet sind, an die Ladestation (50) anzudocken und die mobile Batterie (30) jedes der Mehrzahl von mobilen Ladeschiffen (40) unter Verwendung von Elektrizität zu laden, welche an die Mehrzahl von mobilen Ladeschiffen (40) über die Ladestation (50) übertragen wird.

5. Austauschbares Marine-Energiespeichersystem (1) nach Anspruch 2, wobei das wenigstens eine mobile Ladeschiff (40) durch ein unbemanntes System betrieben wird, welches dazu eingerichtet ist, auf Grundlage eines Steuersignals der Betriebssteuereinheit (60) automatisch zu arbeiten.

6. Austauschbares Marine-Energiespeichersystem (1) nach Anspruch 2, wobei die Ladestation (50) umfasst,
einen Stationskörper (51), welcher dazu eingerichtet ist, auf dem Meer zu schwimmen; und
einen Leistungsgenerator (52), welcher in dem Stationskörper (51) angeordnet ist und dazu eingerichtet ist, Elektrizität unter Verwendung von wenigstens eines aus Solarlicht, Windenergie und Gezeitenenergie zu generieren.

7. Austauschbares Marine-Energiespeichersystem (1) nach Anspruch 6, wobei die Ladestation (50) einen ersten Andock-Verbindungsteil (54) umfasst, welcher von einer lateralen Fläche des Stationskörpers (51) vorsteht, und
wobei das wenigstens eine mobile Ladeschiff (40) einen zweiten Andock-Verbindungsteil (43) umfasst, welcher mit dem ersten Andock-Verbindungsteil (54) verbunden ist.

8. Austauschbares Marine-Energiespeichersystem (1) nach Anspruch 7, wobei in einem Zustand, in welchem der erste Andock-Verbindungsteil (54) und der zweite Andock-Verbindungsteil (43) miteinander verbunden sind, Elektrizität, welche in der Ladestation (50) gespeichert ist, an das wenigstens eine mobile Ladeschiff (40) übertragen wird, um die mobile Batterie (30) zu laden.

9. Steuerverfahren des austauschbaren Marine-Energiespeichersystems (1) nach Anspruch 1, wobei das Verfahren umfasst:
Übertragen einer Bewegungsroute des in Betrieb befindlichen Schiffs (10) von dem in Betrieb befindlichen Schiff (10) an eine Betriebssteuereinheit (60);
Berechnen einer bewegbaren Distanz des in Betrieb befindlichen Schiffs (10) über die angebrachte Batterie (20), welche in dem in Betrieb befindlichen Schiff (10) angebracht ist, durch die Betriebssteuereinheit (60);
Festlegen einer Austauschposition und Zeit der angebrachten Batterie (20), welche in dem in Betrieb befindlichen Schiff (10) angebracht ist, durch die Betriebssteuereinheit (60) auf Grundlage der bewegbaren Distanz und der Bewegungsroute des in Betrieb befindlichen Schiffs (10); und
Ersetzen der angebrachten Batterie (20) mit der mobilen Batterie (30), welche an dem mobilen Ladeschiff (40) angebracht ist, nach einem Bewegen des in Betrieb befindlichen Schiffs (10) zu der Austauschposition.

10. Steuerverfahren des austauschbaren Marine-Energiespeichersystems (1) nach Anspruch 9, ferner umfassend:
Teilen der Bewegungsroute des in Betrieb befindlichen Schiffs (10) in eine Mehrzahl von Zonen durch die Betriebssteuereinheit (60);
Bestimmen, einer gesamten unverteilten Energiekapazität jeder Zone auf Grundlage einer Anzahl des mobilen Ladeschiffs (40) und der Ladestation (50), welche in jeder der geteilten Zonen gemessen wird, durch die Betriebssteuereinheit; und
Bewegen wenigstens eines der mobilen Ladeschiffe (40) und der Ladestation (50) zu einer Zone, welche eine nicht ausreichende gesamte unverteilte Energiekapazität aufweist, nach einem Bestimmen der gesamten unverteilten Energiekapazität, wobei die nicht ausreichende gesamte unverteilte Energiekapazität durch die gesamte Menge an Energie des mobilen Ladeschiffs (40) definiert wird, und wobei die Ladestation (50) für die jeweilige Zone geringer als eine vorfestgelegte Menge an Energie ist.

## Revendications

1. Système de stockage d'énergie marine échangeable (1) comprenant :
une batterie mobile (30) configurée pour être utilisée comme une source de puissance d'un navire d'exploitation (10) après le remplacement d'une batterie montée (20) montée sur le navire d'exploitation (10) ;
**caractérisé en ce qu'**au moins un navire de recharge mobile (40) est configuré pour déplacer la batterie mobile (30) entre le navire d'exploitation (10) et une station de recharge (50) ; et
la station de recharge (50) configurée pour flotter sur la mer avec l'au moins un navire de recharge mobile (40) et recharger la batterie mobile (30) chargée sur l'au moins un navire de recharge mobile (40) en utilisant l'électricité générée par la station de recharge (50).

2. Système de stockage d'énergie marine échangeable (1) selon la revendication 1, comprenant en outre :
un dispositif de commande d'opérations (60) configuré sans fil pour être connecté au navire d'exploitation (10), à l'au moins un navire de recharge mobile (40) et à la station de recharge (50), et configuré pour commander des opérations de l'au moins un navire de recharge mobile (40) et de la station de recharge (50) sur la base d'un emplacement et d'un itinéraire de navigation du navire d'exploitation (10) transmis au dispositif de commande d'opérations (60).

3. Système de stockage d'énergie marine échangeable (1) selon la revendication 2, dans lequel le navire d'exploitation (10) est alimenté en électricité par l'intermédiaire de la batterie montée (20) ou de la batterie mobile (30) qui génèrent une puissance de propulsion du navire d'exploitation (10) en faisant fonctionner un moteur électrique fourni dans le navire d'exploitation (10).

4. Système de stockage d'énergie marine échangeable (1) selon la revendication 2, dans lequel l'au moins un navire de recharge mobile (40) est une pluralité de navires de recharge mobiles (40) configurés pour s'amarrer à la station de recharge (50) et recharger la batterie mobile (30) de chacun de la pluralité de navires de recharge mobiles (40) en utilisant l'électricité transmise à la pluralité de navires de recharge mobiles (40) par l'intermédiaire de la station de recharge (50).

5. Système de stockage d'énergie marine échangeable (1) selon la revendication 2, dans lequel l'au moins un navire de recharge mobile (40) fonctionne grâce à un système autonome configuré pour fonctionner automatiquement sur la base d'un signal de commande du dispositif de commande d'opérations (60).

6. Système de stockage d'énergie marine échangeable (1) selon la revendication 2, dans lequel la station de recharge (50) comprend :
un corps de station (51) configuré pour flotter sur la mer ; et
un générateur de puissance (52) disposé dans le corps de station (51) et configuré pour générer de l'électricité en utilisant au moins une parmi la lumière solaire, l'énergie éolienne et l'énergie marémotrice.

7. Système de stockage d'énergie marine échangeable (1) selon la revendication 6, dans lequel la station de recharge (50) comprend une première partie de connexion d'amarrage (54) faisant saillie à partir d'une surface latérale du corps de station (51), et
dans lequel l'au moins un navire de recharge mobile (40) comprend une seconde partie de connexion d'amarrage (43) connectée à la première partie de connexion d'amarrage (54).

8. Système de stockage d'énergie marine échangeable (1) selon la revendication 7, dans lequel, dans un état dans lequel la première partie de connexion d'amarrage (54) et la seconde partie de connexion d'amarrage (43) sont connectées l'une à l'autre, l'électricité stockée dans la station de recharge (50) est transmise à l'au moins un navire de recharge mobile (40) pour recharger la batterie mobile (30).

9. Procédé de commande du système de stockage d'énergie marine échangeable (1) selon la revendication 1, le procédé comprenant :
la transmission, à partir du navire d'exploitation (10) jusqu'à un dispositif de commande d'opérations (60), d'un itinéraire de déplacement du navire d'exploitation (10) ;
le calcul, par le dispositif de commande d'opérations (60), d'une distance pouvant être parcourue par le navire d'exploitation (10) par l'intermédiaire de la batterie montée (20) montée dans le navire d'exploitation (10) ;
l'établissement, par le dispositif de commande d'opérations (60) sur la base de la distance pouvant être parcourue et de l'itinéraire de déplacement du navire d'exploitation (10), d'une position et d'un moment d'échange de la batterie montée (20) montée dans le navire d'exploitation (10) ; et
le remplacement de la batterie montée (20) par la batterie mobile (30) montée sur le navire de recharge mobile (40) après le déplacement du navire d'exploitation (10) jusqu'à la position d'échange.

10. Procédé de commande du système de stockage d'énergie marine échangeable (1) selon la revendication 9, comprenant en outre :
la division, par le dispositif de commande d'opérations (60), de l'itinéraire de déplacement du navire d'exploitation (10) en une pluralité de zones ;
la détermination, par le dispositif de commande d'opérations (60), d'une capacité énergétique conservée totale de chaque zone sur la base d'un nombre du navire de recharge mobile (40) et de la station de recharge (50) mesuré dans chacune des zones divisées ; et
le déplacement d'au moins un parmi le navire de recharge mobile (40) et la station de recharge (50) jusqu'à une zone ayant une capacité énergétique conservée totale insuffisante après la détermination de la capacité énergétique conservée totale, dans lequel la capacité énergétique conservée totale insuffisante est définie par le fait que la quantité d'énergie totale du navire de recharge mobile (40) et de la station de recharge (50) pour la zone respective est inférieure à une quantité d'énergie préétablie.
